# EUROPÄISCHE PATENTSCHRIFT

(11) **EP 1 471 267 B1**
(45) Veröffentlichungstag und Bekanntmachung des Hinweises auf die Patenterteilung: **08.10.2008**
(21) Anmeldenummer: 04000749.4
(22) Anmeldetag: 15.01.2004
(51) Int. Cl.: F16B 21/16, B29C 33/30, B30B 15/02

(54) **Vorrichtung zur lösbaren Befestigung von Maschinenteilen auf einem Schaft grossen Durchmessers.**
Fastening device for removably attaching machine parts onto a shaft of large diameter.
Dispositif pour la fixation amovible de pièces de machine sur un arbre de gros diamètre

(30) Priorität: 10.04.2003 DE 10316565
(43) Veröffentlichungstag der Anmeldung: 27.10.2004
(73) Patentinhaber: MBK Maschinenbau Koetke GmbH, 29394 Reinstorf (DE)
(72) Erfinder: Koetke, Claus-Dieter, 29389 Bad Bodenteich (DE)
(74) Vertreter: Prietsch, Reiner

(56) Entgegenhaltungen:
- DE-A1- 2 419 426
- FR-A- 2 287 990
- GB-A- 116 961

## Beschreibung

Die Erfindung betrifft eine Vorrichtung zum lösbaren Verspannen mindestens eines Maschinenteils mit einem letzteres durchsetzenden Schaft mit Kreisquerschnitt.

Solche Vorrichtungen sind aus der FR-A-2 287 990 und der DE-A-24 19 426 bekannt.

Im Maschinenbau muss häufig ein Maschinenteil auf einem zylindrischen Schaft großen Durchmessers lösbar festgesetzt oder es müssen zwei oder mehr Maschinenteile mittels eines solchen Schaftes lösbar verbunden werden. Das Wort "Schaft" ist hierbei in seinem weitesten Sinn zu verstehen. Im Einzelfall kann es sich um einen Maschinenholm, eine Achse, eine Welle oder einen Bolzen handeln. Die Maschinenteile können Platten, Trägerprofile, Lagerringe und dergl. mehr sein. Weithin üblich ist es, den betreffenden Schaft mindestens an seinem Ende mit einem Gewinde zu versehen, auf das mindestens eine Mutter, meist unter Zwischenschaltung einer Scheibe, aufgedreht und zum Zweck des Verspannens mit einem vorgegebenen Drehmoment festgezogen wird. Bei großen Schaftdurchmessern von beispielsweise mehr als 60 mm stößt dieser Befestigungsart allerdings auf praktische Schwierigkeiten. Diese lassen sich an folgendem Beispiel erläutern:

Die Blasformhälften einer Hohlkörperblasmaschine sitzen auf Schließplatten, die auf sie durchsetzenden Schäften in Form von Holmen mittels Muttern festgesetzt und verspannt sind, die auf Gewinde aufgedreht sind, mit welchen die überstehenden Enden der Holme versehen sind. Der Holmdurchmesser kann beispielsweise 120 mm betragen. Dann wird die entsprechende Schließplatte mit Muttern M 100 auf den Holmen festgesetzt. Werden die Holme aus verhältnismäßig preisgünstiger und bereits gehärteter Meterware hergestellt, so ist das Schneiden eines Gewindes M 100 zeitaufwendig und schwierig. Werden hingegen die Holme aus Rundmaterial maßgefertigt, so ist zwar das Gewindeschneiden vergleichsweise einfach, jedoch das abschließende Härten zeitaufwendig, teuer und mit dem Risiko des Verzuges behaftet. Ebenso sind Muttern großen Durchmessers, in diesem Beispiel mit einer Schlüsselweite von 160 mm, aufwendig in der Herstellung und lassen sich nur noch mit Schlagschlüsseln festziehen, was einen Anzug mit kontrolliertem Drehmoment ausschließt. Umgekehrt lassen sich solche Muttern nach längerer Betriebszeit der entsprechenden Blasform häufig nicht mehr zerstörungsfrei lösen, weil die Gewinde sich infolge der ständigen Wechselbelastungen eingearbeitet haben.

Der Erfindung liegt die Aufgabe zugrunde, eine fertigungstechnisch einfachere und praktikablere Befestigungsvorrichtung der einleitend angegebenen allgemeinen Gattung zu schaffen.

Diese Aufgabe ist erfindungsgemäß gelöst durch
- eine auf ein überstehendes Ende des Schaftes aufschiebbare Spannhülse mit über ihren Umfang gleichmäßig verteilten, achsparallelen, zumindest über einen Teil ihrer Länge als Gewindebohrungen ausgebildeten Durchgangsbohrungen,
- einen formschlüssig in eine Ringnut nahe des Schaftendes einsetzbaren, geteilten Nutring mit zu den Bohrungen der Spannhülse fluchtenden Durchgangsöffnungen
- eine Sicherungsscheibe mit zu den Bohrungen der Spannhülse fluchtenden Durchgangsöffnungen
- und Spannschrauben, die, die Durchgangsöffnungen der Sicherungsscheibe und des Nutrings durchgreifend, in die Bohrungen der Spannhülse eindrehbar sind und sich zum Verspannen des Maschinenteils gegen letzteres abstützen.

Diese Lösung hat den Vorteil, dass sich die Bearbeitung des Endes des Schaftes, z.B. eines Holms, einer Welle oder eines Bolzens, verglichen mit dem bisher notwendigen Schneiden eines Gewindes, auf das Einstechen einer Ringnut beschränkt, dass die weiteren Teile der Spann- und Befestigungsvorrichtung fertigungstechnisch unaufwendig sind, und dass sich die aufzubringende Spannkraft über die Anzahl der Spannschrauben und deren wie üblich kontrollierbares Anzugsdrehmoment leicht einstellen lässt.

Bevorzugt stützen sich die Spannschrauben gegen das Maschinenteil über eine gehärtete Druckscheibe ab (Anspruch 2).

Der Schaft kann sich auf seiner seinem überstehenden Ende abgewandten Seite formschlüssig unmittelbar oder über mindestens ein weiteres Maschinenteil gegen das (erste) Maschinenteil abstützen (Anspruch 3).

Insbesondere kann der Schaft auf seiner seinem überstehenden Ende abgewandten Seite zur formschlüssigen Abstützung einen Kopf oder Kragen haben (Anspruch 4), mit welchem sich der Schaft, z.B. ein zylindrischer Bolzen, gegen die der Befestigungsvorrichtung abgewandte Seite des oder der Maschinenteile abstützt.

Alternativ kann der Schaft auf seiner seinem überstehenden Ende abgewandten Seite zur formschlüssigen Abstützung eine zweite Ringnut haben, in welche ein geteilter Anschlagring eingreift (Anspruch 5). Diese Ausführungsform eignet sich vor allem, wenn der Schaft die Funktion eines Maschinenholms, einer Welle oder einer Achse hat.

Nach einer Weiterbildung der zuletzt genannten Ausführungsform kann das Maschinenteil eine den Anschlagring zumindest teilweise aufnehmende Ausnehmung haben (Anspruch 6), so dass die Teile des Anschlagrings durch Formschluss in der Nut des Schaftes gehalten sind. Gewünschtenfalls kann die Ausnehmung so tief gemacht werden, dass das der Befestigungsvorrichtung abgewandte Ende des Schaftes über die entsprechende Fläche des Maschinenteiles nicht übersteht sondern mit dieser Flasche bündig oder in dem Maschinenteil versenkt ist.

In der Zeichnung ist eine Spann- und Befestigungsvorrichtung nach der Erfindung beispielhaft und schematisch vereinfacht dargestellt. Es zeigt:
- Fig. 1: die Vorrichtung nach der Erfindung im montierten Zustand im Schnitt,
- Fig. 2: das Ende des in Fig. 1 dargestellten Schaftes,
- Fig. 3 bis 8: die Teile 3 bis 5 sowie 7 bis 9 in Fig. 1, jeweils in perspektivischer Darstellung und teilweise im Schnitt,
- Fig. 9: eine weitere Ausführungsform der Vorrichtung in montiertem Zustand im Schnitt.

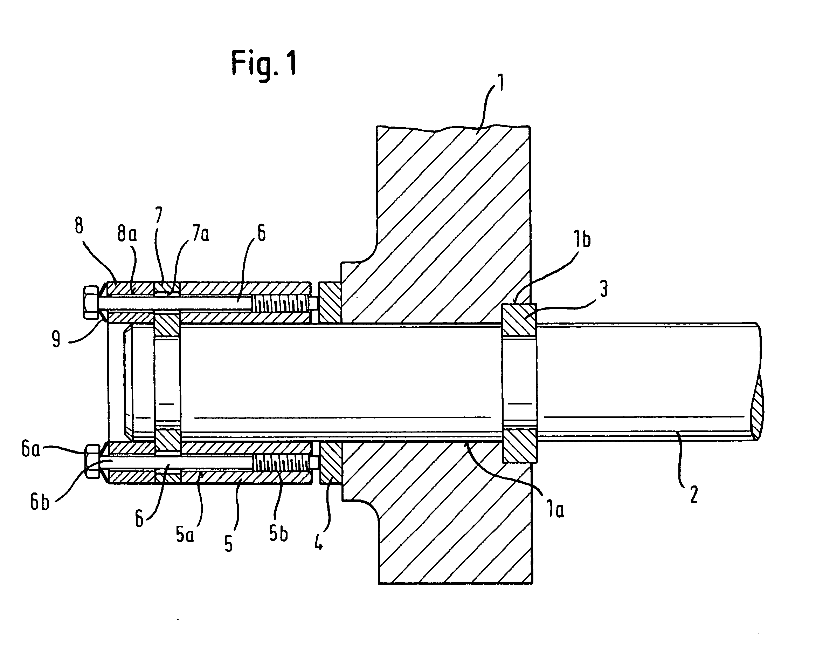

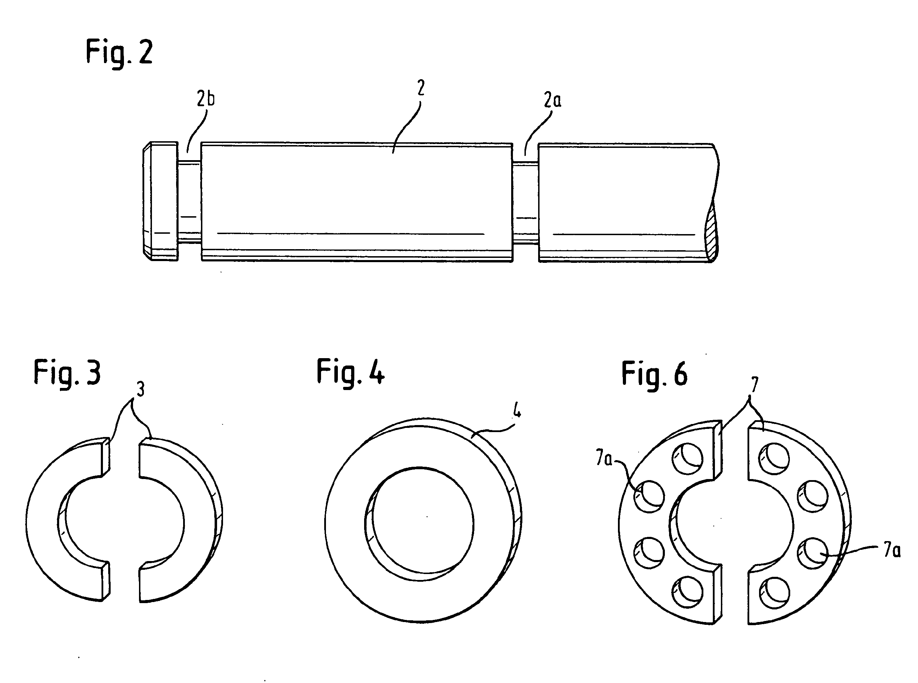

Fig. 1 zeigt einen Teil eines Maschinenteils, z.B. einer Schließplatte 1, montiert auf dem Ende eines Maschinenholms 2. Die Schließplatte 1 trägt eine nicht dargestellte, bewegliche Blasformhälfte, welche gegenüber ihrem ortsfesten Gegenstück zum Zweck des Öffnens und des Schließens der Blasform mit Hilfe von Holmen wie etwa 2, verfahrbar ist. Die Schließplattenbefestigung auf dem jeweiligen Holm muss bestimmungsgemäß Kräfte z.B. im Bereich bis zu 400 kN aufnehmen. Hierzu hat die Bohrung 1a der Schließplatte 1 formseitig eine konzentrische Ausdrehung 1b, mit welcher sie formschlüssig einen geteilten Anschlagring 3 übergreift, der in einer ersten Ringnut 2a (vgl. Fig. 2) des Holms 2 angeordnet ist. Gegen diesen geteilten Anschlagring 3 ist die Schließplatte 1 unter Zwischenschaltung einer gehärteten Druckscheibe 4 mittels einer Spannhülse 5 verspannt. Die Spannhülse 5 hat, gleichmäßig über ihren Umfang verteilt, achsparallele Durchgangsbohrungen 5a, die mindestens über einen Teil ihrer Länge ein Innengewinde 5b haben. Mittels in die Bohrungen 5a eingesetzter und eingedrehter Spannschrauben 6 ist die Spannhülse 5 gegen einen geteilten Nutring 7 verspannbar, der formschlüssig in eine Ringnut 2b nahe dem Ende des Holms 2 eingreift. Die Schäfte der Spannschrauben 6 durchgreifen hierzu Bohrungen 7a in dem Nutring 7 und Bohrungen 8a in einer Sicherungsscheibe 8. Die Bohrungen in den Teilen 5, 7 und 8 sind selbstverständlich deckungsgleich. Zwischen die Köpfe 6a der Spannschrauben 6 und die entsprechenden Flächen der Sicherungsscheibe 8 sind Tellerfedern 9 eingefügt, die die Sicherungsscheibe 8 in federnder Anlage gegen den geteilten Nutring 7 halten, der anderenfalls lose sitzen würde, weil der zwischen dem Schraubenkopf 6a und der Gegenstirnfläche der Sicherungsscheibe 8 liegende Schraubenschaftabschnitt 6b länger als der maximal benötigte Spannweg sein muss, damit sichergestellt ist, dass beim Anziehen der Spannschrauben 6 die Schließplatte 1 zwischen dem Anschlagring 3 und dem Nutring 7 verspannt wird.

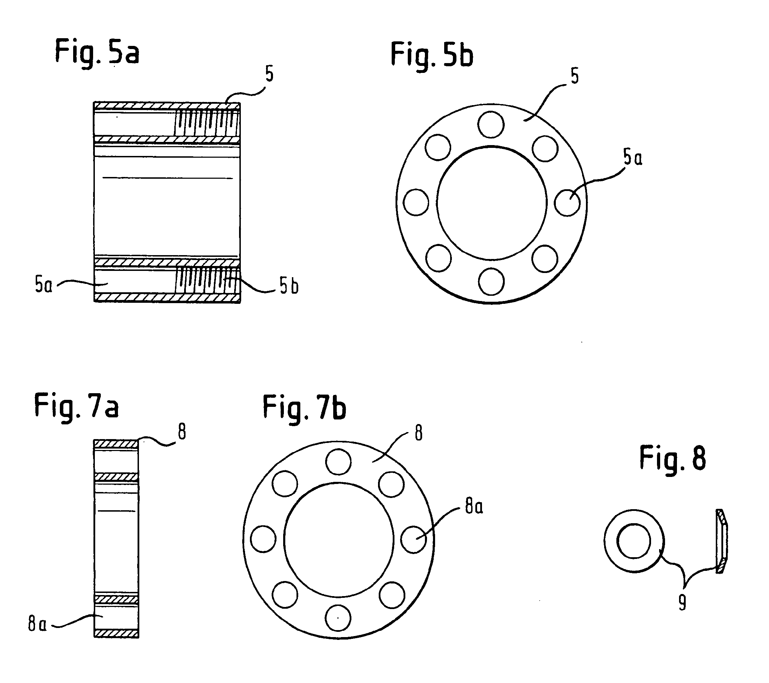

Die Fig. 2 bis 8 zeigen die vorgenannten Teile der Befestigungs- und Spannvorrichtung, ausgenommen die Spannschrauben.

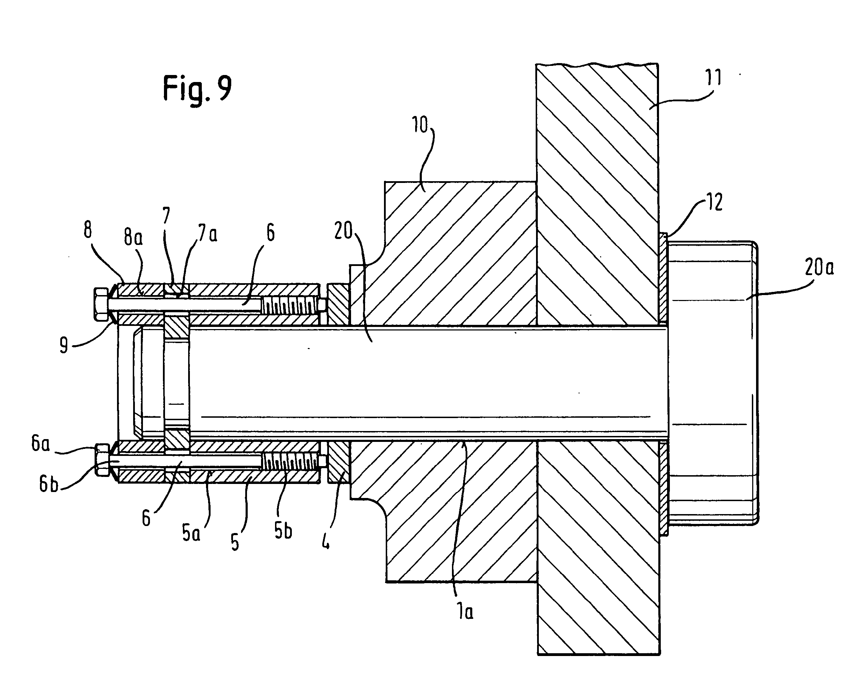

Fig. 9 zeigt eine weitere Ausführungsform der Vorrichtung, hier zum Verbinden von zwei plattenförmigen Maschinenteilen 10 und 11 mittels eines zylindrischen Schaftes 20, dessen von der Befestigungsvorrichtung abgewandtes Ende als Kopf 20a ausgebildet ist, der unter Zwischenschaltung einer Unterlegscheibe 12 gegen die entsprechende Planfläche des Maschinenteils 11 anliegt. Der Schaft 20 kann die Funktion eines Elementes nur zur kraftschlüssigen Verbindung der Maschinenteile 10 und 11 haben, deren Positionierung relativ zueinander durch andere Mittel, z.B. Passstifte (nicht dargestellt), sichergestellt wird.

Wenn der Schaft die Funktion einer Welle hat (z.B. könnte an die Stelle des Rundkopfes 20a des Schaftes 20 in Fig. 9 ein Ritzel oder Zahnrad treten), ist zur Herstellung einer drehfesten Verbindung mit dem betreffenden Maschinenteil zwischen diesem und dem Schaft wie üblich ein Keil oder dergl. angeordnet (nicht dargestellt).

Bei dem auf dem Schaft sitzenden Maschinenteil kann es sich auch z.B. um den Innenring eines Wälzlagers handeln oder um einen auf dem Schaft sitzenden Keilring, der mittels der Befestigungs- und Spannvorrichtung mit seinem kegelförmigen Mantel in eine entsprechende Ausnehmung eines weiteren Maschinenteils geschoben und dadurch mit letzterem verspannt wird (nicht dargestellt).

## Patentansprüche

1. Vorrichtung zum lösbaren Verspannen mindestens eines Maschinenteils (1, 10) mit einem letzteres durchsetzenden Schaft (2, 20) mit Kreisquerschnitt, mit
- einer mit auf ein überstehendes Ende des Schaftes (2, 20) aufschiebbare Spannhülse (5) mit über ihren Umfang gleichmäßig verteilten, achsparallelen, zumindest über einen Teil ihrer Länge als Gewindebohrungen (5b) ausgebildeten Durchgangsbohrungen (5a),
- einem formschlüssig in eine Ringnut (2b) nahe des Schaftendes einsetzbaren, geteilten Nutring (7) mit zu den Bohrungen der Spannhülse (5) fluchtenden Durchgangsöffnungen (7a),
- einer Sicherungsscheibe (8) mit zu den Bohrungen (5a) der Spannhülse (5) fluchtenden Durchgangsöffnungen (8a),
- und Spannschrauben (6), die, die Durchgangsöffnungen der Sicherungsscheibe (8) und des Nutrings (7) durchgreifend, in die Bohrungen (5a) der Spannhülse (5) eindrehbar sind und sich zum Verspannen des Maschinenteils (1, 10, 11) gegen letzteres abstützen.

2. Vorrichtung nach Anspruch 1, **dadurch gekennzeichnet, dass** die Spannschrauben (6) sich gegen das Maschinenteil (1, 10) über eine gehärtete Druckscheibe (4) abstützen.

3. Vorrichtung nach Anspruch 1 oder 2, **dadurch gekennzeichnet, dass** der Schaft (2, 20) auf seiner seinem überstehenden Ende abgewandten Seite sich formschlüssig unmittelbar oder über mindestens ein weiteres Maschinenteil (11) gegen das erste Maschinenteil (1, 10) abstützt.

4. Vorrichtung nach Anspruch 3, **dadurch gekennzeichnet, dass** der Schaft (20) auf seiner seinem überstehenden Ende abgewandten Seite zur formschlüssigen Abstützung einen Kopf (20a) hat.

5. Vorrichtung nach Anspruch 3, **dadurch gekennzeichnet, dass** der Schaft (2) auf seiner seinem überstehenden Ende abgewanden Seite zur formschlüssigen Abstützung eine zweite Ringnut (2a) hat, in welche ein geteilter Anschlagring (3) eingreift.

6. Vorrichtung nach Anspruch 5, **dadurch gekennzeichnet, dass** das Maschinenteil (1) eine den Anschlagring zumindest teilweise aufnehmende Ausnehmung (1b) hat.

## Claims

1. An apparatus for detachably clamping at least one machine part (1, 10) with a shaft (2, 20) with a circular cross section which penetrates the same, comprising:
- a clamping sleeve (5) which can be slid onto a protruding end of the shaft (2, 20) and which comprises axially parallel through bores (5a) which are evenly distributed over its circumference and are arranged at least over a portion of its length as threaded bores (5b);
- a divided lip seal (7) which is insertable in a interlocking manner into a ring groove (2b) close to the shaft end and comprises pass-through openings (7a) in alignment with the bores of the clamping sleeve (5);
- a securing disk (8) with openings (8a) in alignment with the bores (5a) of the clamping sleeve (5);
- and clamping screws (6) which can be twisted into the bores (5a) of the clamping sleeve (5) by passing through the pass-through openings of the securing disk (8) and the lip seal (7) and rest against the latter for clamping the machine part (1, 10, 11).

2. An apparatus according to claim 1, **characterized in that** the clamping screws (6) rest on the machine part (1, 10) via a hardened pressure disk (4).

3. An apparatus according to claim 1 or 2, **characterized in that** the shaft (2, 20), on its side averted from its protruding end, rests on the machine part (1, 10) in an interlocking manner either directly or via at least one further machine part (11).

4. An apparatus according to claim 3, **characterized in that** the shaft (20) comprises a head (20a) for interlocking support on its side averted from the protruding end.

5. An apparatus according to claim 3, **characterized in that** the shaft (2) comprises a second ring groove (2a) for interlocking support on its side averted from its protruding end, into which a divided stop ring (3) engages.

6. An apparatus according to claim 5, **characterized in that** the machine part (1) comprises a recess (1b) which receives the stop ring at least in part.

## Revendications

1. Dispositif pour serrer de manière amovible au moins une pièce de machine (1, 10) avec une tige traversant la dite pièce (2, 20) la tige ayant une section circulaire, avec
- une douille de serrage pouvant (5) être enfilée sur une extrémité de la tige dépassant (2, 20), avec des trous de passage (5a) répartis de manière régulière sur son périmètre, parallèles à l'axe, constitués au moins sur une partie de leur longueur comme trou fileté (5b),
- une bague à rainure fendue (7) pouvant être insérée de manière solidaire dans une gorge à rainure (2b) près de l'extrémité de la tige avec des trous de passages (7a) alignés avec les trous de la douille de serrage (5).
- une disque de sécurité (8) avec des trous de passages (8a) alignés avec les trous (5a) de la douille de serrage (5),
- et des vis de serrage (6), qui peuvent être vissées dans les trous (5a) de la douille de serrage (5) en passant à travers les trous de la disque de sécurité (8) de la bague à rainure (7) et s'appuie sur ladite douille pour serrer la pièce de machine (1, 10, 11).

2. Dispositif selon la revendication 1, **caractérisé en ce**ci que les vis de serrage (6) s'appuient contre la pièce de machine (1, 10) à travers un disque de butée trempée (4).

3. Dispositif selon la revendication 1 ou 2, **caractérisé en ce**ci que la tige (2, 20) s'appuie de manière solidaire par son côté opposé à son extrémité dépassant, soit immédiatement, soit par l'intermédiaire d'une autre pièce de machine (11) contre la première pièce de machine (1,10).

4. Dispositif selon la revendication 3, **caractérisé en ce**ci que la tige(20) possède à son côté opposé à son extrémité dépassant une tête (20a) servant à l'appui solidaire.

5. Dispositif selon la revendication 3, **caractérisé en ce**ci que la tige (2) possède à son côté opposé à son extrémité dépassant une seconde gorge annulaire (2a) servant à l'appui solidaire, et dans laquelle un anneau de butée (3) s'insère.

6. Dispositif selon la revendication 5, **caractérisé en ce**ci que la pièce de machine (1) possède l'anneau de butée pour pouvoir être du moins en partie retiré vers le haut (1b).
